(19) Europäisches Patentamt / European Patent Office / Office européen des brevets

(11) **EP 3 781 919 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **19759527.5**

(22) Anmeldetag: **21.08.2019**

(51) Internationale Patentklassifikation (IPC):
**G01M 1/10** $^{(2006.01)}$ **G01G 1/02** $^{(2006.01)}$
**G01G 19/14** $^{(2006.01)}$ **G01M 1/12** $^{(2006.01)}$

(52) Gemeinsame Patentklassifikation (CPC):
**G01M 1/10; G01M 1/122**

(86) Internationale Anmeldenummer:
**PCT/EP2019/072370**

(87) Internationale Veröffentlichungsnummer:
**WO 2020/038995 (27.02.2020 Gazette 2020/09)**

(54) **VERFAHREN ZUR BESTIMMUNG VON MASSE UND SCHWERPUNKTLAGE EINER ZULADUNG EINES BEWEGUNGSSYSTEMS, INSBESONDERE BEI EINER WERKZEUGMASCHINE**

METHOD FOR DETERMINING THE MASS AND THE POSITION OF THE CENTRE OF GRAVITY OF AN ADDITIONAL LOAD OF A MOVEMENT SYSTEM, IN PARTICULAR IN THE CASE OF A MACHINE TOOL

PROCÉDÉ DE DÉTERMINATION DE LA MASSE ET DU CENTRE DE GRAVITÉ D'UNE CHARGE UTILE D'UN SYSTÈME DE DÉPLACEMENT, EN PARTICULIER DANS UNE MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2018 DE 102018006612**

(43) Veröffentlichungstag der Anmeldung:
**24.02.2021 Patentblatt 2021/08**

(73) Patentinhaber: **Franz Kessler GmbH**
**88422 Bad Buchau (DE)**

(72) Erfinder:
• **KEIBACH, Bernd**
**88524 Uttenweiler (DE)**
• **FISCHER, Manuel**
**88499 Neufra (DE)**

(74) Vertreter: **Otten, Roth, Dobler & Partner mbB Patentanwälte**
**Großtobeler Straße 39**
**88276 Berg / Ravensburg (DE)**

(56) Entgegenhaltungen:
**DE-U1- 29 622 132 US-A1- 2014 144 256**
**US-A1- 2018 104 825**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung von Masse und Schwerpunktlage einer Zuladung eines Bewegungssystems sowie ein Bewegungssystem, das dazu eingerichtet ist, Masse und Schwerpunktlage einer Zuladung gemäß einem solchen Verfahren zu bestimmen, insbesondere bei einer Werkzeugmaschine.

Die Masse sowie die relative Position eines Werkstücks in einem Halter oder auf einem Tisch eines Bewegungssystems, wie beispielsweise eines Schwenk-Drehtisches einer Werkzeugmaschine, hat insbesondere im Fall von Achsen, die schwerkraftbelastet sind, einen maßgeblichen Einfluss auf die Präzision einer Positionssteuerung. Grundsätzlich können die Masse und die Schwerpunktlage eines Werkstücks manuell ermittelt werden, woraufhin ein Steuerverfahren entsprechend angepasst werden kann, um die Masse und Schwerpunktlage bei einer Positionssteuerung zu berücksichtigen.

Beispielsweise erfolgt gemäß DE 10 2015 113 890 A1 und gemäß US 2016 / 0 001 373 A1 eine Kompensation auftretender Kräfte in Abhängigkeit von einer Werkstückposition und einer Werkstückmasse, wobei diese als vorgegebene Werte vorab eingegeben werden.

Aus DE 10 2016 104 146 A1 ist zudem ein Verfahren bekannt, das eine Bestimmung der Masse sowie der Schwerpunktlage eines Werkstücks auf einem Werkstückträger einer Werkstückaufnahmeeinrichtung erlaubt, die linear verfahrbar sowie um zwei senkrecht zueinander angeordnete Drehachsen drehbar ist. Die Masse des auf dem Werkstückträger angeordneten Werkstücks wird hierbei ermittelt, indem das Werkstück testweise linear beschleunigt wird. Aus der dabei auftretenden ermittelten Kraft wird die Masse bestimmt. Zudem wird die Schwerpunktlage des Werkstücks mittels gleichförmigen Rotierens des Werkstücks um jeweils eine der Drehachsen ermittelt. Im Fall einer exzentrischen Anordnung des Werkstücks bzw. dessen Schwerpunkts ergibt sich ein periodisch variierendes Antriebsdrehmoment an dem jeweiligen Antrieb, aus dessen Größe und Phasenlage die Koordinaten des Schwerpunkts ermittelt werden können.

US 2018/104825 A1 beschreibt ein Verfahren zum Ermitteln eines Trägheitsmoments eines Werkstücks, das an einem Roboterarm eines Roboters drehbar angebracht ist. Einzelmomente werden bestimmt, indem das Werkstück gezielt um einzelne Drehachsen gedreht wird, nachdem es vom Roboter aufgenommen wurde.

Aus US 2014/0144256 A1 ist ein System zum Messen der Massenträgheit eines Objekts bekannt. Das System umfasst einen Drehtisch, auf dem das Objekt ablegbar ist. Der Drehtisch ist an einer schräg verlaufenden Antriebswelle befestigt. Messungen werden in unterschiedlichen Schwenkpositionen durchgeführt.

Des Weiteren offenbart DE 296 22 132 U1 eine Messvorrichtung zur Ermittlung von Schwerpunktlage und Massenträgheitsmoment von Werkstücken und Werkzeugen. Die Messvorrichtung umfasst eine seilaufgehängte Pendelvorrichtung, mittels derer ein Messobjekt zu Messzwecken mehrachsig verschoben und geschwenkt werden kann.

Der vorliegenden Erfindung liegt die Aufgabe zugrunde, die einfache und zuverlässige Bestimmung von Masse und Schwerpunktlage einer Zuladung eines Bewegungssystems zu ermöglichen.

Die Aufgabe wird erfindungsgemäß durch ein Verfahren mit den Merkmalen des Anspruchs 1 sowie durch ein gemäß diesem Verfahren arbeitendes Bewegungssystem gelöst. Weiterbildungen der Erfindung sind den Unteransprüchen zu entnehmen.

Es wird ein Verfahren zur Bestimmung von Masse und Schwerpunktlage einer Zuladung eines Bewegungssystems vorgeschlagen, welches einen um wenigstens eine erste Achse und eine zweite Achse drehbaren Träger zur Aufnahme der Zuladung sowie elektronisch gesteuerte Antriebe zum Drehen des Trägers um die erste Achse und um die zweite Achse umfasst. Ein Gesamtträgheitsmoment und ein Haltemoment bezüglich der ersten Achse werden in einem beladenen Zustand ermittelt. Zudem werden ein Gesamtträgheitsmoment und ein Haltemoment bezüglich der zweiten Achse in dem beladenen Zustand ermittelt. Ferner werden die Masse und die Schwerpunktlage der Zuladung relativ zu dem Träger aus den Gesamtträgheitsmomenten und den Haltemomenten bezüglich der ersten Achse und der zweiten Achse bestimmt.

Die Erfindung umfasst zudem ein Bewegungssystem, welches einen um wenigstens eine erste und eine zweite Achse drehbaren Träger zur Aufnahme einer Zuladung umfasst. Das Bewegungssystem umfasst ferner elektronisch gesteuerte Antriebe zum Drehen des Trägers um die erste Achse und um die zweite Achse. Außerdem umfasst das Bewegungssystem eine Steuereinheit, die dazu eingerichtet ist, eine Masse und eine Schwerpunktlage der Zuladung gemäß dem genannten Verfahren zu bestimmen.

Das erfindungsgemäße Verfahren sowie das erfindungsgemäßen Bewegungssystem ermöglichen es, eine Masse sowie eine Schwerpunktlage einer Zuladung einfach und zuverlässig zu ermitteln. Sowohl die Masse als auch die Schwerpunktlage können in einem beladenen Zustand ermittelt werden. Hierdurch kann ein zusätzlicher Messschritt vermieden werden, der einem Einspannen einer Zuladung vorausgeht. Zudem kann ein hoher Grad an Fertigungsgenauigkeit erzielt werden. Bei einer Bearbeitung eines Werkstücks können dessen Masse und Schwerpunktlage einfach und zuverlässig bei einer Positionssteuerung berücksichtigt werden, ohne dass aufwendige Einstellprozeduren vorab erforderlich sind. Zudem können Masse und Schwerpunktlage für beliebige Zuladungen, beispielsweise mit asymmetrischer Geometrie und/oder Masseverteilung, bestimmt werden. Auch eine Anpassung für Werkstücke mit anisotroper Dichte kann problemlos vorgenommen werden.

Aufgrund der einfachen Automatisierbarkeit des erfindungsgemäßen Verfahrens können zudem Bedienfehler vermieden und ein ungenaues, insbesondere außermittiges, Einspannen ausgeglichen werden. Eine Kompensation kann zudem in zuverlässiger Weise erzielt werden, falls es die Geometrie und/oder Beschaffenheit eines Werkstücks oder die gewünschte Art der Bearbeitung erforderlich macht, das Werkstück exzentrisch anzuordnen. Des Weiteren kann während einer Bearbeitung in einfacher und zuverlässiger Weise ein Nachjustieren erfolgen, beispielsweise wenn sich eine Geometrie und/oder eine Dichte und/oder eine Lage eines Werkstücks aufgrund einer Bearbeitung verändert haben. Ein solches Nachjustieren kann erfolgen, ohne das Werkstück für ein erneutes Vermessen vom Bewegungssystem abnehmen zu müssen.

Das Bewegungssystem kann Teil einer Werkzeugmaschine sein, beispielsweise einer Werkzeugmaschine zur Bearbeitung eines Werkstücks, wie etwa zur spanenden Bearbeitung, zur Oberflächenbehandlung, zur Laserbearbeitung, zur Weiterverarbeitung oder dergleichen. In diesem Fall ist vorzugsweise der Träger derart in der Werkzeugmaschine angeordnet, dass eine auf dem Träger angeordnete Zuladung in einem Bearbeitungsraum der Werkzeugmaschine angeordnet ist. Die Zuladung kann ein zu bearbeitendes Werkstück sein. Mittels des Bewegungssystems kann vorzugsweise eine Lage der Zuladung relativ zu einem Bearbeitungswerkzeug verändert werden. Hierbei ist erfindungsgemäß möglich, dass das Bewegungssystem eine Rotation des Werkstücks erzeugt, die für eine Fräs-Dreh-Bearbeitung hinreichend ist. Ebenso ist erfindungsgemäß möglich, dass das Bewegungssystem lediglich zum Positionieren herangezogen wird, insbesondere in Kombination mit einem rotierenden Werkzeug.

Das Bewegungssystem kann neben den durch die erste Achse und die zweite Achse definierten Freiheitsgraden weitere Freiheitsgrade aufweisen. Beispielsweise ist eine zusätzliche lineare Verfahrbarkeit erfindungsgemäß möglich. Zudem ist ein Drehen und/oder Schwenken um zumindest eine weitere Achse erfindungsgemäß möglich. Hierfür kann das Bewegungssystem weitere Antriebe aufweisen. Zusätzlich oder alternativ kann das Bearbeitungswerkzeug um zumindest eine weitere Achse dreh- oder schwenkbar sein.

Die elektronisch gesteuerten Antriebe umfassen vorzugsweise zumindest einen ersten Elektromotor zur Erzeugung einer Drehbewegung um die erste Achse und/oder einen zweiten Elektromotor zur Erzeugung einer Drehbewegung um die zweite Achse. Es ist jedoch grundsätzlich erfindungsgemäß möglich, dass ein einzelner Elektromotor in Kombination mit einer geeigneten Kraftübertragung verwendet wird, um ein Drehen des Trägers um die erste Achse und um die zweite Achse zu bewerkstelligen. Ebenso ist erfindungsgemäß möglich, dass mehrere Elektromotoren für die erste Achse und/oder mehrere Elektromotoren für die zweite Achse vorgesehen sind. In einer Ausführungsform der Erfindung ist eine Drehzahl und/oder ein erzeugtes Drehmoment zumindest eines der elektronisch gesteuerten Antriebe geregelt. Die Steuereinheit und/oder der elektronisch gesteuerte Antrieb bzw. die elektronisch gesteuerten Antriebe können hierfür geeignete Regelkreise aufweisen.

Der Träger umfasst vorzugsweise eine Tischplatte, auf welcher die Zuladung befestigbar ist, beispielsweise einen Maschinentisch. Die Tischplatte kann geeignete Befestigungsmittel und/oder Verbindungspunkte und/oder Anbindungsschienen oder dergleichen zur Anbindung und/oder zum Einspannen der Zuladung umfassen. Vorzugsweise ist der Träger wechselbar ausgestaltet, sodass für unterschiedliche Zuladungen jeweils ein geeigneter Träger in einfacher Weise verwendet werden kann.

Bevorzugt werden das Gesamtträgheitsmoment und/oder das Haltemoment der ersten Achse in dem beladenen Zustand automatisiert ermittelt. Der entsprechende Verfahrensschritt kann dabei von der Steuereinheit selbsttätig durchgeführt werden. Insbesondere sind zur Ermittlung des Gesamtträgheitsmoments und/oder des Haltemoments bezüglich der ersten Achse keine Benutzereingaben nötig, die etwa eine Geometrie und/oder eine Masse und/oder eine Dichte und/oder eine Befestigungsposition der Zuladung betreffen. Analog hierzu werden vorzugsweise das Gesamtträgheitsmoment und/oder das Haltemoment der zweiten Achse in dem beladenen Zustand automatisiert ermittelt.

Zudem werden vorzugsweise die Masse und die Schwerpunktlage der Zuladung relativ zu dem Träger aus den Gesamtträgheitsmomenten und den Haltemomenten bezüglich der ersten Achse und der zweiten Achse automatisiert bestimmt, beispielsweise von der Steuereinheit.

Das Bewegungssystem und/oder die Werkzeugmaschine kann eine Benutzerschnittstelle aufweisen, mittels derer Benutzereingaben für die Steuereinheit getätigt werden können. Die Benutzerschnittstelle kann dazu vorgesehen sein, die automatisierte Ermittlung von Masse und Schwerpunktlage anzufordern. Zudem kann die Benutzerschnittstelle zur Eingabe von Basisparametern vorgesehen sein, die beispielsweise Eigenschaften des verwendeten Trägers und/oder der elektronisch gesteuerten Antriebe umfassen.

In dem Fall, dass der Träger wechselbar ist und unterschiedlich ausgebildete Träger verwendet werden können, ist erfindungsgemäß möglich, dass das Bewegungssystem eine Erkennungseinheit umfasst, die den verwendeten Träger selbstständig erkennen kann. Die Erkennungseinheit kann hierfür geeignete Sensoren umfassen, die zur Erfassung von Merkmalen des Trägers geeignet sind, die ein Identifizieren des Trägers bzw. des Trägertyps erlauben. Es ist auch erfindungsgemäß möglich, dass ein verwendeter Trägertyp über die Benutzerschnittstelle eingebbar ist.

Eine hohe Präzision einer Bewegung des Bewegungssystems und/oder ein hoher Grad an Fertigungspräzision können insbesondere dann erzielt werden, wenn die Steuereinheit dazu eingerichtet ist, die Masse und Schwerpunktlage der Zuladung nach deren Ermittlung bei einer Bewegung und/oder Positionierung der Zuladung zu berücksichtigen. Eine derartige Berücksichtigung kann ein Anfordern eines verringerten oder vergrößerten Antriebsmoments der elektronisch gesteuerten Antriebe umfassen, beispielsweise um Einflüsse auf die Positionierungsgenauigkeit aufgrund der auf die Zuladung wirkenden Erdanziehung zu kompensieren. Vorzugsweise werden die ermittelte Masse und Schwerpunktlage bei einer Bearbeitung der Zuladung ständig berücksichtigt. Werden Masse und Schwerpunktlage nach einer Teilbearbeitung erneut ermittelt, können für eine weitere Bearbeitung die neue Masse und Schwerpunktlage berücksichtigt werden.

In einer bevorzugten Ausführungsform des Bewegungssystems umfasst dieses einen Schwenk-Drehtisch, wobei der Träger ein Werkstücktisch des Schwenk-Drehtisches ist. Bei dem Schwenk-Drehtisch kann es sich um eine sogenannte Schwenkbrücke handeln, wie sie bei Werkzeugmaschinen häufig Anwendung findet. Alternativ oder zusätzlich kann der Träger ein Spannfutter sein, das um die erste Achse und um die zweite Achse drehbar ist. Der Träger kann auch eine Halterung von beliebiger anderer Art sein.

Vorzugsweise ist die erste Achse eine Rotationsachse für den Träger und die zweite Achse eine Schwenkachse für den Träger. In dem Fall eines Schwenk-Drehtisches bzw. einer Schwenkbrücke ist die erste Achse beispielsweise die Drehachse und die zweite Achse die Schwenkachse.

Die erste Achse und die zweite Achse können senkrecht zueinander angeordnet sein. Zudem können die erste Achse und die zweite Achse in kleinem Abstand zueinander verlaufen oder sich auch exakt schneiden. Dies bringt Vorteile hinsichtlich einer Ansteuerung sowie einer präzisen Positionierung mit sich. Grundsätzlich sind aber beliebige andere Anordnungen der ersten Achse relativ zu der zweiten Achse erfindungsgemäß möglich.

Es ist erfindungsgemäß möglich, dass das Bewegungssystem mit geeigneten zusätzlichen Sensoren ausgestattet ist, um die Gesamtträgheitsmomente und/oder die Haltemomente zu bestimmen. Hierfür kommen beispielsweise Kraftsensoren, Drehzahlsensoren, Drehmomentsensoren und dergleichen in Betracht. Eine einfache Bauweise und ein hoher Grad an Zuverlässigkeit aufgrund einer geringen Fehleranfälligkeit können insbesondere dann erzielt werden, wenn die Gesamtträgheitsmomente und die Haltemomente aus Größen bestimmt werden, die in Regelkreisen der elektronisch gesteuerten Antriebe ohne eine Verwendung zusätzlicher Sensoren bereitstehen. Hierdurch kann auf zusätzliche Sensoren verzichtet werden, was Kosten reduziert und eine Ausfallwahrscheinlichkeit verringert.

Die Masse und die Schwerpunktlage können insbesondere dann präzise und zuverlässig bestimmt werden, wenn die in den Regelkreisen der elektronisch gesteuerten Antriebe bereitstehende Größe zumindest einen Betriebsstrom und/oder eine Drehposition und/oder eine Drehzahl und/oder eine Beschleunigungszeit umfasst. Die Größe kann auch mehrere Parameter umfassen. Die Steuereinheit kann zur Erfassung und/oder Verarbeitung der Größe eingerichtet sein. Hierfür ist auch erfindungsgemäß möglich, dass ein zeitlicher Verlauf der Größe zumindest vorübergehend gespeichert wird.

Fehler aufgrund zu geringer Signalstärke können insbesondere dann vorteilhaft vermieden und eine hohe Genauigkeit einer Bestimmung kann insbesondere dann erzielt werden, wenn das Haltemoment der ersten Achse in einer Stellung der ersten Achse bestimmt wird, in welcher das Haltemoment der ersten Achse maximal ist. Alternativ oder zusätzlich wird das Haltemoment der zweiten Achse in einer Stellung der zweiten Achse bestimmt, in welcher das Haltemoment der zweiten Achse maximal ist. Das Verfahren kann einen Verfahrensschritt umfassen, in welchem die Stellung maximalen Haltemoments der ersten Achse ermittelt wird. Zudem kann das Verfahren einen Verfahrensschritt umfassen, in welchem die Stellung maximalen Haltemoments der zweiten Achse ermittelt wird. Die Stellung maximalen Haltemoments der ersten Achse kann eine Stellung sein, in welcher der Träger um die zweite Achse relativ zu einer Grundstellung des Trägers bezüglich der zweiten Achse verdreht ist. Ebenso kann die Stellung maximalen Haltemoments der zweiten Achse eine Stellung sein, in welcher der Träger um die erste Achse relativ zu einer Grundstellung des Trägers bezüglich der ersten Achse verdreht ist. Vorzugsweise werden die Stellungen maximalen Haltemoments für die erste Achse und für die zweite Achse durch Verdrehen um beide Achsen ermittelt. Hierbei kann eine Stellung maximalen Betriebsstroms des entsprechenden elektronisch gesteuerten Antriebs als Stelle maximalen Haltemoments identifiziert werden. Wie oben erwähnt kann jedoch auch ein anderer und/oder weiterer Betriebsparameter und/oder zumindest ein geeigneter Sensorwert zur Identifikation der Stellung maximalen Haltemoments herangezogen werden. Alternativ ist erfindungsgemäß möglich, dass das Haltemoment zumindest der ersten Achse und/oder der zweiten Achse in einer vorgegebenen Stellung der jeweils anderen Achse ermittelt werden, die unabhängig von der Zuladung festgelegt ist und/oder auf einer Benutzereingabe basiert.

Gemäß einer Ausführungsform der Erfindung wird das Haltemoment der ersten Achse und/oder der zweiten Achse in einer Stellung der ersten Achse bestimmt, in welcher die erste Achse senkrecht zu einer Schwerkraftrichtung angeordnet ist. Die Stellung maximalen Haltemoments der ersten Achse wird in diesem Fall vorzugsweise ermittelt, indem die Zuladung um die erste Achse gedreht wird, während die erste Achse senkrecht zu der Schwerkraftrichtung angeordnet ist. Hierdurch kann für beliebige Geometrien und Positionierungen der Zuladung ein maximales Haltemoment der ersten Achse mit hoher Genauigkeit bestimmt werden.

Alternativ oder zusätzlich kann das Haltemoment der zweiten Achse in der Stellung maximalen Haltemoments der ersten Achse bestimmt werden. In dieser Stellung der ersten Achse kann die erste Achse senkrecht zu der Schwerkraftrichtung angeordnet sein.

Vorzugsweise wird zur Ermittlung des jeweiligen Gesamtträgheitsmoments in dem beladenen Zustand ein Beschleunigungsmoment um die jeweilige Achse durch Drehen der Zuladung um die jeweilige Achse bestimmt. Hierbei kann die Bestimmung des Beschleunigungsmoments bei zumindest einem vorgegebenen Betriebsstrom für den entsprechenden elektronisch gesteuerten Antrieb erfolgen. Gesamtträgheitsmomente können hierdurch in einfacher Weise mit hoher Genauigkeit bestimmt werden.

Eine rasche Bestimmung von Masse und Schwerpunktlage, die für unterschiedliche Zuladungen problemlos durchgeführt werden kann, kann insbesondere dann erzielt werden, wenn zumindest ein hinterlegter Wert eines Trägheitsmoments des unbeladenen Trägers bezüglich der ersten Achse und/oder eines Trägheitsmoments des unbeladenen Trägers bezüglich der zweiten Achse und/oder einer Masse des unbeladenen Trägers und/oder zumindest einer geometrischen Abmessung des Trägers verwendet wird/werden, um die Masse und/oder die Schwerpunktlage der Zuladung zu bestimmen. Der hinterlegte Wert kann ein über die Benutzerschnittstelle eingebbarer Basisparameter sein. Der hinterlegte Wert kann auch werksseitig hinterlegt sein. Zudem ist erfindungsgemäß möglich, dass der hinterlegte Wert in Abhängigkeit von dem erkannten Typ des Trägers automatisch ausgewählt wird, etwa von der Steuereinheit, beispielsweise aus einer hinterlegten Wertetabelle.

Alternativ oder zusätzlich ist erfindungsgemäß möglich, dass zumindest ein Eichbetriebsschritt in einem unbeladenen Zustand des Träger durchgeführt wird, bei welchem Referenzwerte ermittelt werden, die bei der Bestimmung von Masse und Schwerpunktlage in dem beladenen Zustand berücksichtigt werden. Hierdurch können unterschiedliche Trägertypen berücksichtigt werden. Zudem können Abweichungen aufgrund von Umgebungsparametern berücksichtigt werden. Ferner kann einer Leistungsschwankung bzw. einer Drehmomentschwankung eines Antriebs, beispielsweise aufgrund eines Alterns und/oder nach einer Wartung, etwa aufgrund eines veränderten Leichtlaufs, Rechnung getragen werden.

Eine Schwerpunktlage kann insbesondere dann besonders präzise bestimmt werden, wenn für wenigstens eine der Achsen wenigstens drei unterschiedliche Winkelpositionen angefahren werden, für die jeweils ein Haltemoment bestimmt wird, wobei anhand der Haltemomente für die unterschiedlichen Winkelpositionen eine Außermittigkeit der Zuladung ermittelt wird. Haltemomente können auch für eine Mehrzahl an Kombinationen von Winkelpositionen der ersten Achse und der zweiten Achse bestimmt werden. Hierbei kann eine entsprechende Matrix mit vorgegebenen Winkelpositionen abgefahren werden. Es ist auch erfindungsgemäß möglich, dass die abzufahrenden Winkelpositionen vorab bestimmt werden, etwa bei der Suche nach der Stellung des maximalen Haltemoments der ersten Achse und/oder der zweiten Achse. Beispielsweise können hierbei Winkelpositionen in einem Speicher, wie etwa einem Speicher der Steuereinheit, hinterlegt werden, bei denen vorgegebene Anteile an dem maximalen Haltemoment vorliegen.

Wie oben erwähnt, kann einer fortschreitenden Bearbeitung der Zuladung insbesondere dann Rechnung getragen werden, wenn die Masse der Zuladung zwischen Bearbeitungsschritten einer Bearbeitung der Zuladung ohne Änderung eines Beladungszustands der Zuladung ermittelt wird. Eine fehlerhafte Positionierung aufgrund einer sich verändernden Masse kann hierdurch vorteilhaft vermieden werden. Ebenso können auch eine Schwerpunktlage und/oder ein Gesamtträgheitsmoment wiederholt ermittelt werden.

Im Folgenden wird die vorliegende Erfindung anhand der beigefügten Figuren beispielhaft beschrieben. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:

Fig. 1    ein Bewegungssystem in einer schematischen Seitenansicht;

Fig. 2    eine schematische Seitenansicht eines Trägers des Bewegungssystems mit einer Zuladung in einer gedrehten Stellung;

Fig. 3    eine schematische Draufsicht des Trägers mit der Zuladung; und

Fig. 4    ein schematisches Ablaufdiagramm eines Verfahrens zur Bestimmung von Masse und Schwerpunktlage einer Zuladung eines Bewegungssystems.

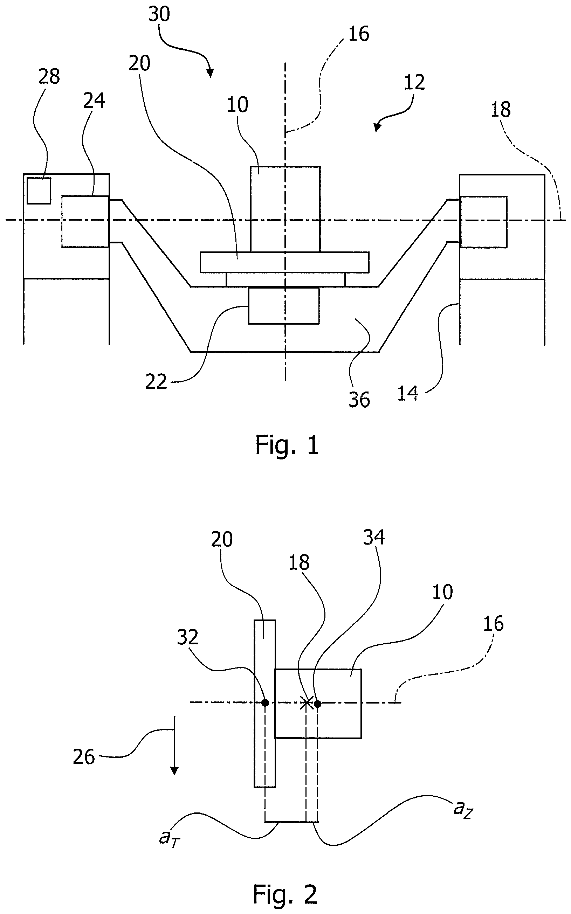

Fig. 1 zeigt ein Bewegungssystem 12 in einer schematischen Seitenansicht. Das Bewegungssystem 12 umfasst einen Träger 20 zur Aufnahme einer Zuladung 10. Der Träger 20 ist um eine erste Achse 16 und um eine zweite Achse 18 drehbar. Zudem weist das Bewegungssystem 12 einen ersten elektronisch gesteuerten Antrieb 22 zum Drehen des Trägers 20 um die erste Achse 16 auf. Außerdem weist das Bewegungssystem 12 einen zweiten elektronisch gesteuerten Antrieb 24 zum Drehen des Trägers 20 um die zweite Achse 18 auf.

Das Bewegungssystem 12 umfasst ferner eine Steuereinheit 28, die dazu eingerichtet ist, eine Masse und eine Schwerpunktlage der Zuladung 10 zu bestimmen. Diese Bestimmung erfolgt gemäß einem Verfahren, das weiter unten genauer beschrieben wird.

Im gezeigten Fall ist das Bewegungssystem 12 Teil einer Werkzeugmaschine 14. Das Bewegungssystem 12 ist dabei in einem nicht dargestellten Bearbeitungsraum der Werkzeugmaschine 14 angeordnet. Die Zuladung 10 ist zudem ein Werkstück, das mittels der Werkzeugmaschine 14 in dem Bearbeitungsraum bearbeitet werden kann.

Das Bewegungssystem 12 umfasst einen Schwenk-Drehtisch 30, der auch als Schwenkbrücke bezeichnet werden kann. Der Träger 20 ist dabei ein Werkstücktisch des Schwenk-Drehtisches 30. Mittels des Schwenk-Drehtisches 30 kann eine Lage der Zuladung 10 relativ zu einem nicht gezeigten Bearbeitungswerkzeug der Werkzeugmaschine 14 verändert werden, wie beispielsweise einem Fräswerkzeug, einem Bohrer, einem Laserkopf, einem Schleifwerkzeug oder dergleichen. Im gezeigten Fall ist die Steuereinheit 28 dazu eingerichtet, die elektronisch gesteuerten Antriebe 22, 24 entsprechend anzusteuern. Die Steuereinheit 28 kann mit einer weiteren Steuereinheit der Werkzeugmaschine 14 verbunden sein, die eine Steuerung des Bearbeitungswerkzeugs vornimmt. Es ist jedoch auch eine gemeinsame Steuereinheit erfindungsgemäß möglich.

Die erste Achse 16 ist eine Rotationsachse für den Träger 20. Mittels eines Drehens des Trägers 20 um die erste Achse 16 kann somit eine Drehposition der Zuladung 10 angepasst werden. Im gezeigten Fall verläuft die erste Achse 16 durch einen Schwerpunkt 32 des Trägers 20 (siehe Fig. 2). Der Träger 20 ist dabei rotationssymmetrisch.

Die zweite Achse 18 ist eine Schwenkachse für den Träger 20. Die zweite Achse 18 ist dabei senkrecht zu der ersten Achse 16 angeordnet. Mittels eines Drehens des Trägers 20 um die zweite Achse 18 kann eine Schwenkposition der Zuladung 10 angepasst werden. Die erste Achse 16 und die zweite Achse 18 schneiden sich. Die zweite Achse 18 verläuft hierbei oberhalb des Trägers und schneidet diesen nicht.

In Kombination mit einem bewegbaren Bearbeitungswerkzeug, das etwa ebenfalls um zumindest eine Achse dreh- und/oder schwenkbar ist, kann eine Bearbeitbarkeit der Zuladung 10 in vielfältiger Weise erzielt werden.

Der Träger 20 ist drehbar an einer Brückeneinheit 36 des Bewegungssystems 30 angeordnet. Die Brückeneinheit 36 ist um die zweite Achse 18 schwenkbar, wobei der Träger 20 sowie die erste Achse 16 mitgeschwenkt werden. Der Träger 20 wiederum ist um die erste Achse 16 relativ zu der Brückeneinheit 36 drehbar. Der erste elektronisch gesteuerte Antrieb 22 ist in der Brückeneinheit 36 angeordnet. Der zweite elektronische Antrieb 24 ist außerhalb der Brückeneinheit 36 und ortsfest zu der Werkzeugmaschine 14 angeordnet.

Grundsätzlich sind jedoch andere Anordnungen des Trägers 20, der Achsen 16, 18 und der elektronisch gesteuerten Antriebe 22, 24 erfindungsgemäß möglich. Der Träger 20 kann beispielsweise bezüglich der ersten Achse 16 exzentrisch angeordnet sein. Alternativ oder zusätzlich kann die zweite Achse 18 durch den Träger 20 und insbesondere durch dessen Schwerpunkt 32 verlaufen. Zudem kann der zweite elektronisch gesteuerte Antrieb 24 auch unterhalb des Trägers 20 angeordnet sein. Die Ausgestaltung des Bewegungssystems 12 derart, dass dieses einen Schwenk-Drehtisch 30 umfasst, ist folglich lediglich beispielhaft.

In der Figur 2 ist der Träger 20 mit der Zuladung 10 schematisch in einer relativ zu der in der Figur 1 dargestellten Grundstellung um 90° geschwenkten Stellung dargestellt. In der Grundstellung ist die erste Achse 16 parallel zu einer Schwerkraftrichtung 26 angeordnet. In der in der Figur 2 dargestellten Stellung ist hingegen die erste Achse 16 senkrecht zu der Schwerkraftrichtung 26 angeordnet. Die in der Figur 2 gezeigte Stellung wird erreicht, indem der Träger 20 bzw. die Brückeneinheit 36 um die zweite Achse 18 geschwenkt wird. Wie in der Figur 2 zu erkennen ist, verläuft die zweite Achse 18 nicht durch den Schwerpunkt 32 des Trägers 20. Zudem verläuft die zweite Achse 18 im gezeigten Fall nicht durch einen Schwerpunkt 34 der Zuladung, wobei dies von der Art und Geometrie der Zuladung abhängt. In den meisten Fällen wird zudem die zweite Achse 18 nicht durch einen gemeinsamen Schwerpunkt des Trägers 20 und der Zuladung 10 verlaufen. Bei einem Schwenken des Trägers 20 bzw. der Brückeneinheit 36 treten daher Momente auf, die von einem Schwenkwinkel abhängig sind.

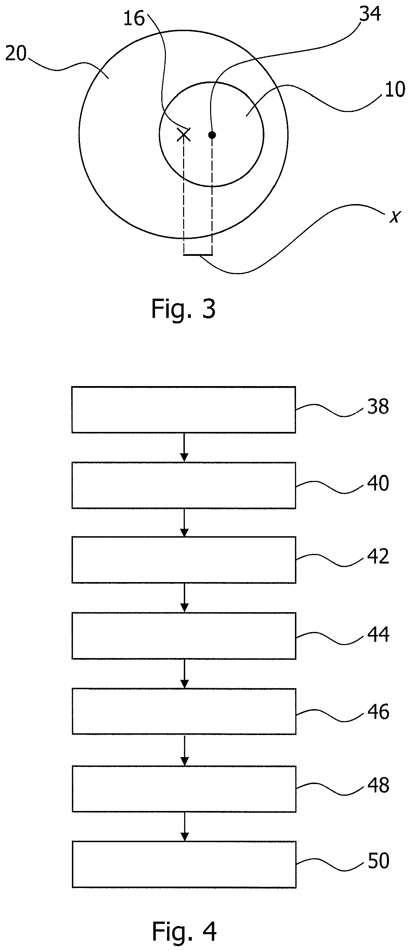

In der Figur 3 ist der Träger 20 mit der Zuladung 10 schematisch in einer Draufsicht dargestellt, betrachtet parallel zu der ersten Achse 16. Im gezeigten Fall ist die Zuladung 10, die lediglich beispielhaft zylinderförmig dargestellt ist, aber eine beliebige Geometrie aufweisen kann, exzentrisch bezüglich der Achse 16 auf dem Träger 20 angeordnet. Eine solche Anordnung kann durch unpräzises Positionieren, durch absichtliches Positionieren und/oder aufgrund der asymmetrischen geometrischen Beschaffenheit der Zuladung 10 zustande kommen, was der häufigste Fall in der Praxis ist. Im Speziellen kann die Zuladung 10, wie im gezeigten Fall, derart auf dem Träger 20 angeordnet sein, dass die erste Achse 16 nicht durch den Schwerpunkt 34 der Zuladung verläuft. Aufgrund einer derartigen Exzentrizität treten bei einer Drehung des Trägers 20 um die erste Achse 16 entsprechende Momente auf.

Eine Masse und eine Schwerpunktlage der Zuladung 10 können nun wie folgt bestimmt werden. Das im Folgenden beschriebene Verfahren wird dabei im gezeigten Fall durch geeignete Steuerung und Verarbeitung von ermittelten Werten von der Steuereinheit 28 durchgeführt.

Erfindungsgemäß werden ein Gesamtträgheitsmoment und ein Haltemoment bezüglich der ersten Achse 16 in einem mit der Zuladung 10 beladenen Zustand des Trägers 20 ermittelt. Zudem werden ein Gesamtträgheitsmoment und ein Haltemoment bezüglich der zweiten Achse 18 in dem beladenen Zustand ermittelt. Die Masse und die Schwerpunktlage der Zuladung 10 werden sodann aus den Gesamtträgheitsmomenten und den Haltemomenten bezüglich der ersten Achse 16 und bezüglich der zweiten Achse 18 bestimmt.

Die Steuereinheit 28 ist dazu eingerichtet, die auf diese Weise ermittelte Masse und Schwerpunktlage der Zuladung 10 bei einer Bewegung und/oder einer Positionierung der Zuladung 10 zu berücksichtigen. Entsprechende Betriebsströme der elektronisch gesteuerten Antriebe 22, 24 werden dabei derart gewählt, dass lageabhängig auftretende Kräfte und Haltemomente kompensiert werden können, sodass eine hohe Präzision einer Bewegungssteuerung erzielt werden kann.

Gemäß dem Verfahren werden die Gesamtträgheitsmomente und die Haltemomente aus Größen bestimmt, die in Regelkreisen der elektronisch gesteuerten Antriebe 22, 24 ohne eine Verwendung zusätzlicher Sensoren bereitstehen. Diese Größe umfasst im gezeigten Fall einen Betriebsstrom, eine Drehposition, eine Drehzahl und/oder eine Beschleunigungszeit.

Das Haltemoment der ersten Achse 16 wird in einer Stellung der ersten Achse 16 bestimmt, in welcher das Haltemoment der ersten Achse 16 maximal ist. Dies erfolgt in einer Stellung der ersten Achse 16, in welcher diese senkrecht zu der Schwerkraftrichtung 26 angeordnet ist. Wie in Figur 3 zu erkennen ist, hängt in dieser Stellung das Haltemoment von einer Winkelposition der Zuladung 10 ab. Bei einem Drehen des Trägers 20 um die erste Achse 16 wird das Haltemoment maximal, wenn der Abstand senkrecht zu der Schwerkraftrichtung 26 zwischen dem Schwerpunkt 34 der Zuladung 10 und der ersten Achse 16 maximal ist, und minimal, wenn der Schwerpunkt 34 der Zuladung 10 und die erste Achse 16 bezüglich der Schwerkraftrichtung 26 fluchten.

Das Haltemoment der zweiten Achse 18 wird in einer Stellung der zweiten Achse 18 bestimmt, in welcher das Haltemoment der zweiten Achse 18 maximal ist. Diese Stellung hängt ebenfalls von der Position des Schwerpunkts 34 der Zuladung 10 und von der Position des Schwerpunkts 32 des Trägers 20 bzw. der Brückeneinheit 36 bezüglich der zweiten Achse 18 ab. Typischerweise ist das Haltemoment der zweiten Achse 18 maximal, wenn die erste Achse 16 senkrecht zu der Schwerkraftrichtung 26 angeordnet ist.

Zur Ermittlung des jeweiligen Gesamtträgheitsmoments wird in dem beladenen Zustand des Trägers 20 ein Beschleunigungsmoment um die jeweilige Achse 16, 18 durch Drehen der Zuladung 10 um die jeweilige Achse 16, 18 bestimmt. Das Beschleunigungsmoment wird dabei bei einem konstanten Betriebsstrom ermittelt.

Für die erste Achse 16 kann dies in einer Stellung durchgeführt werden, in welcher die erste Achse 16 parallel zur Schwerkraftrichtung 26 angeordnet ist. Ein Bestimmen in der senkrechten Stellung ist jedoch auch erfindungsgemäß möglich.

Zur Bestimmung der Masse und der Schwerpunktlage wird zumindest ein hinterlegter Wert verwendet, der den unbeladenen Träger 20 kennzeichnet. Hierfür kommen Trägheitsmomente des Trägers 20 bezüglich der Achsen 16, 18 infrage, ebenso wie dessen Masse, dessen Geometrie, dessen Dichteverteilung und dergleichen.

Zudem wird in einem Eichbetriebsschritt, der in einem unbeladenen Zustand des Trägers 20 durchgeführt wird, zumindest ein Referenzwert ermittelt, der bei der Bestimmung von Masse und Schwerpunktlage in dem beladenen Zustand berücksichtigt wird. Hierbei wird ein Referenzwert für Reibungsverluste ermittelt, die bei einem Drehen des Trägers 20 auftreten. Die sich hierdurch ergebenden Werte können von Werten, die im beladenen Zustand ermittelt werden, abgezogen werden, um Reibungsverluste entsprechend zu berücksichtigen. Der Eichbetriebsschritt kann bei einer erstmaligen Inbetriebnahme des Bewegungssystems 12 erfolgen. Zudem können weitere Eichbetriebsschritte zwischen Verwendungen des Bewegungssystems 12 durchgeführt werden, etwa um eine zeitliche Veränderung des zumindest einen Referenzwerts zu berücksichtigen.

Eine Außermittigkeit der Zuladung 10 wird ermittelt, indem für wenigstens eine der Achsen 16, 18 wenigstens drei unterschiedliche Winkelpositionen angefahren werden, für die jeweils ein Haltemoment bestimmt wird. Diese Haltemomente werden dann zur Ermittlung der Außermittigkeit herangezogen. Im gezeigten Fall ist eine Anzahl unterschiedlicher Winkelpositionen wählbar, wodurch eine Genauigkeit der Ermittlung der Außermittigkeit einstellbar ist.

Bei einer Benutzung des Bewegungssystems 12 zur Positionierung der Zuladung 10 kann je nach gewünschtem Bearbeitungsumfang die Masse der Zuladung 10 und/oder deren Schwerpunktlage zwischen Bearbeitungsschritten und ohne Änderung des Beladungszustands der Zuladung 10 ermittelt werden. Wird beispielsweise in einem ersten Bearbeitungsschritt eine Grobbearbeitung durchgeführt, während derer eine größere Menge Material entfernt wird, können anschließend Masse und Schwerpunktlage der grob bearbeiteten Zuladung 10 erneut bestimmt werden. Eine darauf folgende Feinbearbeitung kann dann mit einer hohen Präzision durchgeführt werden, da eine Positionierung auf der Grundlage einer präzisen Bestimmung von Masse und Schwerpunktlage der grob bearbeiteten Zuladung 10 erfolgt.

Masse und Schwerpunktlage werden hierbei auf der Grundlage der folgenden vier Grundgleichungen ermittelt:

$$M_{2,Halte} = F_T \times a_T - F_Z \times a_Z \quad (1)$$

wobei $M_{2,Halte}$ das Haltemoment der zweiten Achse 18 bezeichnet, $F_T$ die Gewichtskraft des unbeladenen Trägers 20, $a_T$ den Abstand zwischen dem Schwerpunkt 32 des Trägers 20 und der zweiten Achse 18, $F_Z$ die Gewichtskraft der Zuladung 10 und $a_Z$ den Abstand zwischen dem Schwerpunkt 34 der Zuladung 10 und der zweiten Achse 18 (siehe Figur 2).

$$J_1 = J_{1,T} + J_{1,Z} \quad (2)$$

wobei $J_1$ das Gesamtträgheitsmoment bezüglich der ersten Achse 16 bezeichnet, $J_{1,T}$ das Trägheitsmoment des unbeladenen Trägers 20 bezüglich der ersten Achse 16 und $J_{1,Z}$ das Trägheitsmoment der Zuladung 10 bezüglich der ersten Achse 16.

$$J_2 = J_{2,T} + J_{2,Z} \quad (3)$$

wobei $J_2$ das Gesamtträgheitsmoment bezüglich der zweiten Achse 18 bezeichnet, $J_{2,T}$ das Trägheitsmoment des unbeladenen Trägers 20 bezüglich der zweiten Achse 18 und $J_{2,Z}$ das Trägheitsmoment der Zuladung 10 bezüglich der zweiten Achse 18.

$$M_{1,Halte} = F_Z \times x \quad (4)$$

wobei $M_{1,Halte}$ das Haltemoment der ersten Achse 16 bezeichnet und $x$ den Abstand zwischen dem Schwerpunkt 34 der Zuladung 10 und der ersten Achse 16 (siehe Figur 3).

Eine Masse bzw. ein Trägheitsmoment der Brückeneinheit 26 werden im vorliegenden Fall bereits bei der Steuerung der elektronisch gesteuerten Antriebe 22, 24 von der Steuereinheit 28 berücksichtigt.

Der Ablauf eines erfindungsgemäßen Verfahrens zur Bestimmung der Masse und Schwerpunktlage der Zuladung 10 ist schematisch in Figur 4 dargestellt.

In einem ersten Verfahrensschritt 38 wird ein Eichbetriebsschritt mit unbeladenem Träger 20 durchgeführt. Hierbei werden Reibmomente der ersten Achse 16 und der zweiten Achse 18 ermittelt.

Der erste Verfahrensschritt 38 kann unabhängig von den weiteren Verfahrensschritten durchgeführt werden, beispielsweise bei einer erstmaligen Inbetriebnahme oder nach einem Wechsel des Trägers 20. Die übrigen Verfahrensschritte werden in einem beladenen Zustand des Trägers 20 durchgeführt.

In einem zweiten Verfahrensschritt 40 wird eine Stellung maximalen Haltemoments der ersten Achse 16 ermittelt, indem eine Stromaufnahme des ersten elektronisch gesteuerten Antriebs 22 bestimmt wird, während der Träger 20 sowie die darauf angebrachte Zuladung 10 um die erste Achse 16 gedreht werden. Dies kann in einer Stellung erfolgen, in der die erste Achse 16 senkrecht zu der Schwerkraftrichtung 26 angeordnet ist. Alternativ kann die Stellung maximalen Haltemoments der ersten Achse 16 durch Drehen um beide Achsen 16, 18 ermittelt werden. Sodann wird das Haltemoment der ersten Achse 16 in der Stellung maximalen Haltemoments der ersten Achse 16 ermittelt.

In einem dritten Verfahrensschritt 42 wird eine Stellung maximalen Haltemoments der zweiten Achse 18 ermittelt, indem eine Stromaufnahme des zweiten elektronisch gesteuerten Antriebs 24 bestimmt wird, während der Träger 20 sowie die darauf angebrachte Zuladung 10 um die zweite Achse 18 gedreht werden. Dies kann bei beliebiger Stellung bezüglich der ersten Achse 16 erfolgen. Alternativ kann die Stellung maximalen Haltemoments der zweiten Achse 18 durch Drehen um beide Achsen 16, 18 ermittelt werden. Sodann wird das Haltemoment der zweiten Achse 18 in der Stellung maximalen Haltemoments der zweiten Achse 18 ermittelt.

In einem vierten Verfahrensschritt 44 wird das Gesamtträgheitsmoment bezüglich der ersten Achse 16 durch Drehung um die erste Achse 16 bei vorgegebenem Betriebsstrom des ersten elektronisch gesteuerten Antriebs 22 ermittelt.

In einem fünften Verfahrensschritt 46 wird das Gesamtträgheitsmoment bezüglich der zweiten Achse 18 durch Drehung um die zweite Achse 18 bei vorgegebenem Betriebsstrom des zweiten elektronisch gesteuerten Antriebs 24 ermittelt.

In einem sechsten Verfahrensschritt 48 wird die Außermittigkeit der Zuladung 10 bestimmt, indem, wie oben beschrieben, wenigstens drei unterschiedliche Winkelpositionen bezüglich der entsprechenden Achse 16, 18 angefahren werden.

In einem siebten Verfahrensschritt 50 werden aus den obigen Gleichungen sowie unter Verwendung der während des Eichbetriebsschritts ermittelten Referenzwerte sowie des zumindest einen hinterlegten Werts, der den unbeladenen Träger 20 kennzeichnet, die Masse und die Schwerpunktlage der Zuladung 10 berechnet.

Die beschriebene Reihenfolge, in welcher die Verfahrensschritte 38-50 durchgeführt werden, ist hierbei rein exemplarisch zu verstehen. Bedarfsweise können einzelne Schritte übersprungen/weggelassen oder die Schritte in einer anderen Reihenfolge durchgeführt werden.

Die ermittelte Masse sowie die ermittelte Schwerpunktlage werden bei einer folgenden Positionssteuerung von der Steuereinheit 28 berücksichtigt, sodass ein hoher Grad an Genauigkeit erzielt werden kann. Zumindest einige der Verfahrensschritte können, wie erwähnt, bedarfsweise auch zwischen Bearbeitungsschritten durchgeführt werden, um im Fall von Veränderungen der Zuladung 10 diese entsprechend kompensieren zu können.

**Patentansprüche**

1. Verfahren zur Bestimmung von Masse und Schwerpunktlage einer Zuladung (10) eines Bewegungssystems (12), insbesondere einer Werkzeugmaschine (14), welches einen um wenigstens eine erste Achse (16) und eine zweite Achse (18) drehbaren Träger (20) zur Aufnahme der Zuladung (10) sowie elektronisch gesteuerte Antriebe (22, 24) zum Drehen des Trägers (20) um die erste Achse (16) und um die zweite Achse (18) umfasst, wobei

ein Gesamtträgheitsmoment und ein Haltemoment bezüglich der ersten Achse (16) in einem beladenen Zustand ermittelt werden; und
ein Gesamtträgheitsmoment und ein Haltemoment bezüglich der zweiten Achse (18) in dem beladenen Zustand ermittelt werden;
**dadurch gekennzeichnet, dass**
die Masse und die Schwerpunktlage der Zuladung (10) relativ zu dem Träger (20) aus den Gesamtträgheitsmomenten und den Haltemomenten bezüglich der ersten Achse (16) und der zweiten Achse (18) bestimmt werden.

2. Verfahren nach Anspruch 1, wobei die Gesamtträgheitsmomente und die Haltemomente aus Größen bestimmt werden, die in Regelkreisen der elektronisch gesteuerten Antriebe (22, 24) ohne eine Verwendung zusätzlicher Sensoren bereitstehen, wobei optional die Größe zumindest einen Betriebsstrom und/oder eine Drehposition und/oder eine Drehzahl und/oder eine Beschleunigungszeit umfasst.

3. Verfahren nach einem der vorhergehenden Ansprüche, wobei das Haltemoment der ersten Achse (16) in einer Stellung der ersten Achse (16) bestimmt wird, in welcher das Haltemoment der ersten Achse (16) maximal ist und/oder das Haltemoment der zweiten Achse (18) in einer Stellung der zweiten Achse (18) bestimmt wird, in welcher das Haltemoment der zweiten Achse (18) maximal ist.

4. Verfahren nach Anspruch 3, wobei das Haltemoment der ersten Achse (16) und/oder der zweiten Achse (18) in einer Stellung der ersten Achse (16) bestimmt wird, in welcher die erste Achse (16) senkrecht zu einer Schwerkraftrichtung (26) angeordnet ist.

5. Verfahren nach einem der vorhergehenden Ansprüche, wobei zur Ermittlung des jeweiligen Gesamtträgheitsmoments in dem beladenen Zustand ein Beschleunigungsmoment um die jeweilige Achse (16, 18) durch Drehen der Zuladung (10) um die jeweilige Achse (16, 18) bestimmt wird.

6. Verfahren nach einem der vorhergehenden Ansprüche, wobei zumindest ein hinterlegter Wert eines Trägheitsmoments des unbeladenen Trägers (20) bezüglich der ersten Achse (16) und/oder eines Trägheitsmoments des unbeladenen Trägers (20) bezüglich der zweiten Achse (18) und/oder einer Masse des unbeladenen Trägers (20) und/oder zumindest einer geometrischen Abmessung des Trägers (20) verwendet wird, um die Masse und/oder die Schwerpunktlage der Zuladung (10) zu bestimmen.

7. Verfahren nach einem der vorhergehenden Ansprüche, wobei zumindest ein Eichbetriebsschritt in einem unbeladenen Zustand des Träger (20) durchgeführt wird, bei welcher Referenzwerte ermittelt werden, die bei der Bestimmung von Masse und Schwerpunktlage in dem beladenen Zustand berücksichtigt werden.

8. Verfahren nach einem der vorhergehenden Ansprüche, wobei für wenigstens eine der Achsen (16, 18) wenigstens drei unterschiedliche Winkelpositionen angefahren werden, für die jeweils ein Haltemoment bestimmt wird, und wobei anhand der Haltemomente für die unterschiedlichen Winkelpositionen eine Außermittigkeit der Zuladung (10) ermittelt wird.

9. Verfahren nach einem der vorhergehenden Ansprüche, wobei die Masse und/oder die Schwerpunktlage der Zuladung (10) zwischen Bearbeitungsschritten einer Bearbeitung der Zuladung (10) ohne Änderung eines Beladungszustands der Zuladung (10) ermittelt wird.

10. Verfahren nach einem der vorhergehenden Ansprüche, wobei die erste Achse (16) eine Rotationsachse für den Träger (20) ist, und wobei die zweite Achse (18) eine Schwenkachse für den Träger (20) ist.

11. Verfahren nach einem der vorhergehenden Ansprüche, wobei die erste Achse (16) und die zweite Achse (18) senkrecht zueinander angeordnet sind und/oder wobei die erste Achse (16) die zweite Achse (18) zumindest in Näherung schneidet.

12. Bewegungssystem (12), insbesondere einer Werkzeugmaschine (14), umfassend:

einen um wenigstens eine erste Achse (16) und eine zweite Achse (18) drehbaren Träger (20) zur Aufnahme einer Zuladung (10); und
elektronisch gesteuerte Antriebe (22, 24) zum Drehen des Trägers (20) um die erste Achse (16) und um die zweite Achse (18);
**gekennzeichnet durch**
eine Steuereinheit (28), die dazu eingerichtet ist, eine Masse und eine Schwerpunktlage der Zuladung (10) gemäß einem Verfahren nach einem der vorhergehenden Ansprüche zu bestimmen.

13. Bewegungssystem nach Anspruch 12, wobei die Steuereinheit (28) dazu eingerichtet ist, die Masse und Schwerpunktlage der Zuladung (10) nach deren Ermittlung bei einer Bewegung und/oder Positionierung der Zuladung (10) zu berücksichtigen.

**14.** Bewegungssystem nach Anspruch 12 oder 13, umfassend einen Schwenk-Drehtisch (30), wobei der Träger (20) ein Werkstücktisch des Schwenk-Drehtisches (30) ist.

**15.** Werkzeugmaschine (14) mit zumindest einem Bewegungssystem (12) nach einem der Ansprüche 12 bis 14.

**Claims**

**1.** Method for determining a mass and a position of the centre of gravity of an additional load (10) of a movement system (12), in particular a machine tool (14) which comprises a carrier (20), which can be rotated about at least a first axis (16) and a second axis (18), for receiving the additional load (10), and also electronically controlled drives (22, 24) for rotating the carrier (20) about the first axis (16) and about the second axis (18), wherein

an overall moment of inertia and a holding moment with respect to the first axis (16) are determined in a loaded state; and
an overall moment of inertia and a holding moment with respect to the second axis (18) are determined in the loaded state;
**characterized in that**
the mass and the position of the centre of gravity of the additional load (10) relative to the carrier (20) are determined from the overall moments of inertia and the holding moments with respect to the first axis (16) and the second axis (18).

**2.** Method according to Claim 1, wherein the overall moments of inertia and the holding moments are determined from variables which are available in control loops of the electronically controlled drives (22, 24) without using additional sensors, wherein, optionally, the variable comprises at least one operating current and/or a rotational position and/or a speed of rotation and/or an acceleration time.

**3.** Method according to one of the preceding claims, wherein the holding moment of the first axis (16) is determined in a position of the first axis (16) in which the holding moment of the first axis (16) is at a maximum, and/or the holding moment of the second axis (18) is determined in a position of the second axis (18) in which the holding moment of the second axis (18) is at a maximum.

**4.** Method according to Claim 3, wherein the holding moment of the first axis (16) and/or of the second axis (18) is determined in a position of the first axis (16) in which the first axis (16) is arranged at right angles to a direction of the force of gravity (26).

**5.** Method according to one of the preceding claims, wherein, to determine the respective overall moment of inertia in the loaded state, an acceleration torque about the respective axis (16, 18) is determined by rotating the additional load (10) about the respective axis (16, 18).

**6.** Method according to one of the preceding claims, wherein at least one stored value of a moment of inertia of the unloaded carrier (20) with respect to the first axis (16) and/or of a moment of inertia of the unloaded carrier (20) with respect to the second axis (18) and/or of a mass of the unloaded carrier (20) and/or of at least one geometric dimension of the carrier (20) is used to determine the mass and/or the position of the centre of gravity of the additional load (10).

**7.** Method according to one of the preceding claims, wherein at least one calibration step is carried out in an unloaded state of the carrier (20), in which reference values which are considered during the determination of the mass and position of the centre of gravity in the loaded state are determined.

**8.** Method according to one of the preceding claims, wherein, for at least one of the axes (16, 18), a movement is made to at least three different angular positions, for which a respective holding moment is determined, and wherein an eccentricity of the additional load (10) is determined by using the holding moments for the different angular positions.

**9.** Method according to one of the preceding claims, wherein the mass and/or the position of the centre of gravity of the additional load (10) is determined between machining steps of machining the additional load (10) without changing a loading state of the additional load (10) .

**10.** Method according to one of the preceding claims, wherein the first axis (16) is an axis of rotation for the carrier (20), and wherein the second axis (18) is a pivot axis for the carrier (20).

**11.** Method according to one of the preceding claims, wherein the first axis (16) and the second axis (18) are arranged at right angles to each other, and/or wherein the first axis (16) at least approximately intersects the second axis (18).

**12.** Movement system (12), in particular of a machine tool (14), comprising:

a carrier (20), which can be rotated about at least a first axis (16) and a second axis (18), for receiving an additional load (10); and
electronically controlled drives (22, 24) for rotating the carrier (20) about the first axis (16) and about the second axis (18);

**characterized by**

a control unit (28), which is set up to determine a mass and a position of the centre of gravity of the additional load (10) by using a method according to one of the preceding claims.

13. Movement system according to Claim 12, wherein, after the mass and the position of the centre of gravity of the additional load (10) have been determined, the control unit (28) is set up to consider them when moving and/or positioning the additional load (10).

14. Movement system according to Claim 12 or 13, comprising a pivoting turntable (30), wherein the carrier (20) is a workpiece table of the pivoting turntable (30).

15. Machine tool (14) having at least one movement system (12) according to one of Claims 12 to 14.

**Revendications**

1. Procédé de détermination de la masse et du centre de gravité d'une charge (10) d'un système de déplacement (12), en particulier d'une machine-outil (14), qui comporte un support (20) pouvant tourner sur au moins un premier axe (16) et sur un deuxième axe (18) afin de recevoir la charge (10) et des entraînements à commande électronique (22, 24) destinés à faire tourner le support (20) sur le premier axe (16) et sur le deuxième axe (18),

un moment d'inertie total et un moment de retenue par rapport au premier axe (16) étant déterminés dans un état chargé ; et
un moment d'inertie total et un moment de retenue par rapport au deuxième axe (18) étant déterminés dans l'état chargé ;

**caractérisé en ce que**

la masse et le centre de gravité de la charge (10) par rapport au support (20) sont déterminés à partir des moments d'inertie et des moments de retenue par rapport au premier axe (16) et au deuxième axe (18).

2. Procédé selon la revendication 1, les moments d'inertie totaux et les moments de retenue étant déterminés à partir de grandeurs qui sont disponibles dans les circuits de régulation des entraînements à commande électronique (22, 24) sans utiliser de capteurs supplémentaires, éventuellement la grandeur comprenant au moins un courant de fonctionnement et/ou une position de rotation et/ou une vitesse de rotation et/ou un temps d'accélération.

3. Procédé selon l'une des revendications précédentes, le moment de retenue du premier axe (16) étant déterminé dans une position du premier axe (16) dans laquelle le moment de retenue du premier axe (16) est maximal et/ou le moment de retenue du deuxième axe (18) étant déterminée dans une position du deuxième axe (18) dans laquelle le moment de retenue du deuxième axe (18) est maximal.

4. Procédé selon la revendication 3, le moment de retenue du premier axe (16) et/ou du deuxième axe (18) étant déterminé dans une position du premier axe (16) dans laquelle le premier axe (16) est disposé perpendiculairement à la direction de gravité (26).

5. Procédé selon l'une des revendications précédentes, pour déterminer le moment d'inertie total respectif dans l'état chargé, un moment d'accélération sur l'axe respectif (16, 18) étant déterminé par rotation de la charge (10) sur l'axe respectif (16, 18) .

6. Procédé selon l'une des revendications précédentes, au moins une valeur enregistrée d'un moment d'inertie du support déchargé (20) par rapport au premier axe (16) et/ou d'un moment d'inertie du support déchargé (20) par rapport au deuxième axe (18) et/ou d'une masse du support déchargé (20) et/ou d'au moins une dimension géométrique du support (20) étant utilisée pour déterminer la masse et/ou le centre de gravité de la charge (10).

7. Procédé selon l'une des revendications précédentes, au moins une étape de fonctionnement d'étalonnage étant effectuée dans un état déchargé du support (20), étape dans laquelle des valeurs de référence sont déterminées qui sont prises en compte lors de la détermination de la masse et du centre de gravité à l'état chargé.

8. Procédé selon l'une des revendications précédentes, au moins trois positions angulaires différentes étant approchées pour au moins un des axes (16, 18), pour chacune desquelles un moment de retenue est déterminé, et une excentricité de la charge (10) étant déterminée à partir des moments de retenue pour les différentes positions angulaires.

9. Procédé selon l'une des revendications précédentes, la masse et/ou le centre de gravité de la charge (10) étant déterminés entre les étapes de traitement d'un traitement de la charge (10) sans modifier un état de charge de la charge (10).

10. Procédé selon l'une des revendications précédentes, le premier axe (16) étant un axe de rotation du support (20), et le deuxième axe (18) étant un axe de pivotement du support (20).

**11.** Procédé selon l'une des revendications précédentes, le premier axe (16) et le deuxième axe (18) étant disposés perpendiculairement l'un à l'autre et/ou le premier axe (16) coupant le deuxième axe (18) au moins approximativement.

**12.** Système de déplacement (12), notamment d'une machine-outil (14), ledit système comprenant :

un support (20) pouvant tourner sur au moins un premier axe (16) et sur un deuxième axe (18) afin de recevoir une charge (10) ; et
des entraînements à commande électronique (22, 24) destinés à faire tourner le support (20) sur le premier axe (16) et sur le deuxième axe (18) ;

**caractérisé par**
une unité de commande (28) qui est conçue pour déterminer une masse et un centre de gravité de la charge (10) conformément à un procédé selon l'une des revendications précédentes.

**13.** Système de déplacement selon la revendication 12, l'unité de commande (28) étant conçue pour prendre en compte la masse et le centre de gravité de la charge (10) après qu'ils ont été déterminés lors d'un déplacement et/ou d'un positionnement de la charge (10) .

**14.** Système de déplacement selon la revendication 12 ou 13, comprenant une table tournante pivotante (30), le support (20) étant un plateau porte-pièce de la table tournante pivotante (30).

**15.** Machine-outil (14) comprenant au moins un système de déplacement (12) selon l'une des revendications 12 à 14.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015113890 A1
- US 20160001373 A1
- DE 102016104146 A1
- US 2018104825 A1
- US 20140144256 A1
- DE 29622132 U1